Europäisches Patentamt

European Patent Office

Office européen des brevets

(19)

(11) Publication number: **0 205 283**
**B1**

# EUROPEAN PATENT SPECIFICATION

(12)

(45) Date of publication of the patent specification:
24.05.89

(51) Int. Cl.⁴: **B64D 15/04**

(21) Application number: **86304086.1**

(22) Date of filing: **29.05.86**

(54) Duct for hot air.

(30) Priority: **03.06.85 GB 8513904**

(43) Date of publication of application:
**17.12.86 Bulletin 86/51**

(45) Publication of the grant of the patent:
**24.05.89 Bulletin 89/21**

(84) Designated Contracting States:
**DE FR GB IT NL SE**

(56) References cited:
**US-A- 2 081 963**
**US-A- 2 473 387**
**US-A- 2 868 483**

(73) Proprietor: **SHORT BROTHERS PLC,**
**P.O.Box 241 Airport Road, Belfast BT3 9DZ, Northern**
**Ireland(GB)**

(72) Inventor: **Cole, Derek, 7 Station Road Carnalea, Bangor**
**County Down Northern Ireland(IR)**

(74) Representative: **Moon, Donald Keith et al, BREWER &**
**SON Quality House Quality Court Chancery Lane,**
**London WC2A 1HT(GB)**

## Description

This invention relates to a duct for conveying hot air to a selected area on the inside surface of the skin of an aerostructural leading-edge compartment of an aircraft for preventing accumulation of ice on the external leading-edge surface of the said selected area.

It is known to channel hot air derived from a turbo fan engine served by an inlet cowl to a spray ring located within an annular leading edge compartment of the cowl. The hot air is sprayed from the spray ring onto the selected skin area and thence exhausts into the engine intake duct by means of an annular slot in the skin at the rear edge of the compartment.

It will be appreciated that total control over the rate of supply of the hot air may not be practicable, so that there may be occasions when the air exhausting from the exhaust slot into the engine intake is still at a temperature sufficient to introduce a risk of degradation of any composite structures present in the skin immediately downstream of the exhaust slot.

United States Patent Specification No. 2 473 387 corresponding to the features of the preamble of claim 1 discloses a system for directing hot air to the inner surface of the leading edge of an aircraft wing 11.

A portion of the exhaust gases from an aircraft engine 14 passes through a heat-exchanger 17 to an exhaust pipe 19. Atmospheric air enters a conduit 21 and passes through the heat exchanger 17 where it absorbs heat from the engine exhaust gases, and then passes through a conduit 23 to the entrance path 12 of the aircraft wing 11. After circulating through the wing 11 the exhaust air passes along the path 13 through a conduit 24 and into a chamber 16 of the aircraft. Nose wall sections 38 and 39 are spaced inwardly from the wall 25 of the wing 11 to define passages for the hot air from the entrance path 12.

An air duct 46 extends along the interior forward portion of the wing 11 and communicates with the inner surface of the wing leading edge through a series of openings 53 in a locking strip 52.

In operation, hot air from the path 12 passes into the air duct 46, through the openings 53 and into the passage defined by the inner wall sections 38 and 39 and the wall 25 of the wing 11. This hot air passes along these passages to warm the wall 25 of the wing forward section, and this air is then returned to the exhaust path 13 through holes 34 in a wing rib section between beams 27 and 28.

With US-A 2 473 387, in the event of rupture of the delivery duct there is the risk that hot air escaping from the delivery duct will contact and degrade parts of the aircraft structure.

It is an aim of the invention to alleviate the above-mentioned hazards, and according to the present invention there is provided a duct for conveying hot air to a selected area on the inside surface of the skin of an aerostructural leading-edge compartment of an aircraft for preventing accumulation of ice on the external leading edge surface of the said selected area, the duct comprising a delivery duct through which hot air is channelled forwardly towards the leading edge, an exhaust duct through which spent air, that is, air which has flowed over the inside skin surface, is channelled rearwardly of the compartment, from the compartment to an exhaust aperture in the aircraft skin, and a heat shield on the area of the skin immediately downstream of the aperture characterised in that the delivery duct is contained within the exhaust duct such that hot air channelled towards the leading edge will be contained by the exhaust duct in the event of rupture of the delivery duct.

In a preferred embodiment, there is an open annulus between the inner and outer duct walls at their forward ends thus allowing the spent anti-icing air to pass directly from the leading edge compartment to the duct annulus and thence overboard via the aperture in the outer skin.

Preferably an annulus over-pressure indicator is provided so that a failure of the inner duct wall which allows air to pass directly to the exhaust annulus can be detected and subsequent remedial action undertaken.

In the accompanying drawings, given by way of example:

Figure 1 is a longitudinal, radial section through the wall of an annular inlet cowl, and through an embodiment of a duct in accordance with the present invention; and

Figure 2 is a perspective view of the embodiment of Figure 1.

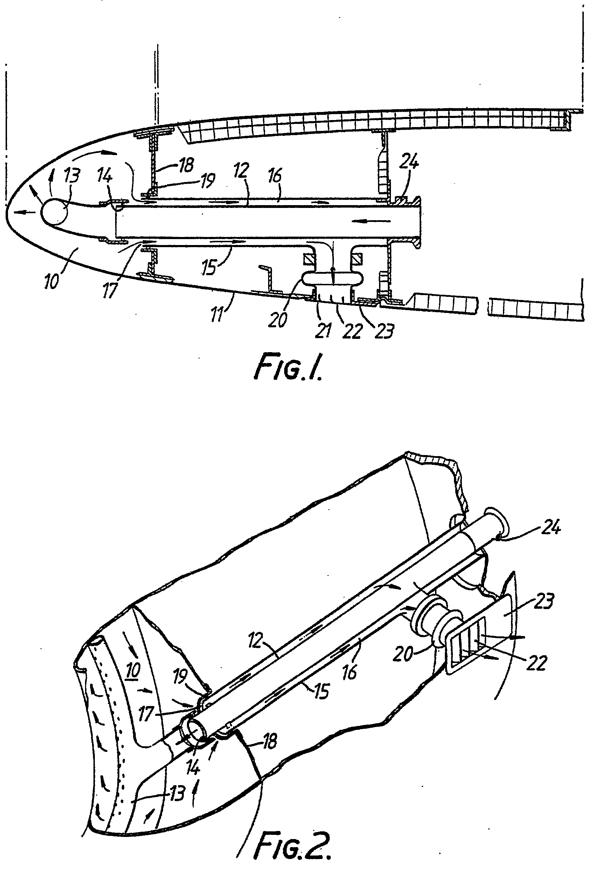

In Figure 1 there is shown a leading edge compartment 10 of the inlet cowl 11, served by a hot air delivery duct 12 to an air-dispensing spray ring 13, which ring is sealed to the duct 12 by a piston-type seal 14. Surrounding the delivery duct 12 is an exhaust duct 15 to define an annular exhaust passage 16 open at its front end 17 to the compartment 10 and sealed to a bulkhead 18 at the rear of the compartment 10 with another piston-type seal 19. Exhaust air is channelled along the passage 16 to an outlet duct 20 sealed to the outer duct 15 and to the periphery of an aperture 21 in the skin of the cowl 11, the aperture 21 being covered by a grille 22. Downstream of the aperture 21 is a heat shield 23. Within the exhaust passage 16 is a pressure sensor 24, connected to a sensor device arranged to alert cabin staff to any rise in pressure in the passage 16 consistent with rupture of the wall of the delivery duct 12.

Figure 2 shows, inter alia, more detail of the aperture 21, grille 22 and heat shield 23.

## Claims

1. A duct for conveying hot air to a selected area on the inside surface of the skin of an aerostructural leading-edge compartment (10) of an aircraft for preventing accumulation of ice on the external leading edge surface of the said selected area, the duct comprising a delivery duct (12) through which hot air is channelled forwardly towards the leading edge, an exhaust duct (15) through which spent air, that is, air which has flowed over the inside skin surface, is channelled rearwardly of the compartment, from the

compartment to an exhaust aperture (21) in the aircraft skin, and a heat shield (23) on the area of the skin immediately downstream of the aperture (21), characterised in that the delivery duct (12) is contained within the exhaust duct (15) such that hot air channelled towards the leading edge will be contained by the exhaust duct (15) in the event of rupture of the delivery duct (12).

2. A duct as claimed in claim 1 characterised in that the delivery duct (12) is connected by a piston seal (14) to an air dispenser (13) within the compartment (10).

3. A duct as claimed in claim 1 or 2 characterised in that the exhaust duct (15) is sealed to a bulkhead (18) at the rear of the compartment (10) by a piston seal (19).

4. A duct as claimed in any one of the preceding claims characterised by a pressure sensor (24) for sensing within the exhaust duct (15) any rise of pressure indicative of rupture of the wall of the delivery duct (12) within the exhaust duct.

**Patentansprüche**

1. Kanal, um Warmluft einem ausgewählten Bereich an der inneren Oberfläche der Außenhaut einer in Flugrichtung vorne liegenden Kante eines flugtechnischen, abgeteilten Raumes (10) eines Flugzeugs zuzuführen, um eine Ansammlung von Eis auf der äußeren, in Flugrichtung vorne liegenden Oberfläche der Kante des ausgewählten Bereiches zu vermeiden, wobei der Kanal einen Zuführkanal (12), durch den Warmluft nach vorne in Richtung auf den vorne liegenden Rand geleitet wird, einen Abführkanal (15), durch den verbrauchte Luft, also Luft, die die innere Oberfläche der Außenhaut bestrichen hat, nach hinten in dem abgeteilten Raum und aus dem abgeteilten Raum zu einer Abluftöffnung (21) in der Außenhaut des Flugzeuges geleitet wird, sowie ein Hitzeschild (23) auf dem Bereich der Außenhaut aufweist, der in Strömungsrichtung direkt hinter der Öffnung (21) liegt, dadurch gekennzeichnet, daß der Zuführkanal (12) derart im Inneren des Abführkanals (15) angeordnet ist, daß die zu dem vorne liegenden Rand geleitete Warmluft im Falle eines Aufreißens des Zuführkanals (12) in dem Abführkanal (15) aufgenommen ist.

2. Kanal nach Anspruch 1, dadurch gekennzeichnet, daß der Zuführkanal (12) im Inneren des abgeteilten Raumes (10) durch eine Ringdichtung (14) mit einem Luftverteiler (13) verbunden ist.

3. Kanal nach einem der Ansprüche 1 oder 2, dadurch gekennzeichnet, daß der Abführkanal (15) im hinteren Bereich des abgeteilten Raumes (10) durch eine Ringdichtung (19) gegen einen Querspant (18) abgedichtet ist.

4. Kanal nach einem der vorhergehenden Ansprüche, gekennzeichnet durch einen Drucksensor (24), um im Inneren des Abführkanals (15) einen Druckanstieg zu erfassen, der auf ein Aufreißen der Wand des Zuführkanals (12) im Inneren des Abführkanals (15) hinweist.

**Revendications**

1. Conduit de transport d'air chaud dans une zone choisie de la surface interne du revêtement d'un compartiment (10) de bord d'attaque d'une structure d'un aéronef, destiné à empêcher l'accumulation de givre sur la surface externe du bord d'attaque de cette zone choisie, le conduit comprenant un conduit de distribution (12) par lequel de l'air chaud est canalisé vers l'avant, vers le bord d'attaque, un conduit d'évacuation (15) par l'intermédiaire duquel de l'air usé, c'est-à-dire de l'air qui s'est écoulé à la surface interne du revêtement, est canalisé vers l'arrière du compartiment, de celui-ci vers une ouverture d'évacuation (21) formée dans le revêtement de l'aéronef, et un organe (23) de protection contre la chaleur placé dans la région du revêtement qui se trouve juste en aval de l'ouverture (21), caractérisé en ce que le conduit de distribution (12) est logé dans le conduit d'échappement (15) de manière que l'air chaud canalisé vers le bord d'attaque soit contenu par le conduit d'échappement (15) en cas de rupture du conduit de distribution (12).

2. Conduit selon la revendication 1, caractérisé en ce que le conduit de distribution (12) est raccordé par un joint de piston (14) à un organe de distribution d'air (13) placé dans le compartiment (10).

3. Conduit selon la revendication 1 ou 2, caractérisé en ce que le conduit d'évacuation (15) coopère de façon étanche avec une cloison (18) placée à l'arrière du compartiment (10) par l'intermédiaire d'un joint de piston (19).

4. Conduit selon l'une quelconque des revendications précédentes, caractérisé par un capteur de pression (24) destiné à détecter, dans le conduit d'évacuation (15), toute élévation de pression représentative d'une rupture de la paroi du conduit de distribution (12) et apparaissant dans le conduit d'évacuation.

*FIG.1.*

*FIG.2.*